# EUROPEAN PATENT SPECIFICATION

(11) **EP 3 975 546 B1**
(45) Date of publication and mention of the grant of the patent: **25.11.2026**
(21) Application number: 21197950.5
(22) Date of filing: 21.09.2021
(51) Int. Cl.: H04W 4/80

(54) **COMMUNICATION APPARATUS FOR WIRELESSLY COMMUNICATING WITH IMAGING APPARATUS, CONTROL METHOD OF COMMUNICATION APPARATUS, AND COMPUTER PROGRAM**
KOMMUNIKATIONSVORRICHTUNG ZUR DRAHTLOSEN KOMMUNIKATION MIT EINER ABBILDUNGSVORRICHTUNG, STEUERVERFAHREN DER KOMMUNIKATIONSVORRICHTUNG UND COMPUTERPROGRAMM
APPAREIL DE COMMUNICATION POUR COMMUNIQUER SANS FIL AVEC UN APPAREIL D'IMAGERIE, PROCÉDÉ DE COMMANDE DE L'APPAREIL DE COMMUNICATION ET PROGRAMME INFORMATIQUE

(30) Priority: 24.09.2020 JP 2020160152
(43) Date of publication of application: 30.03.2022
(73) Proprietor: CANON KABUSHIKI KAISHA, OHTA-KU Tokyo 146-8501 (JP)
(72) Inventor: MIZOBUCHI, Yasuhiro, Tokyo, 146-8501 (JP)
(74) Representative: Canon Europe Limited

(56) References cited:
- US-A1- 2016 366 290
- US-A1- 2019 394 638

## Description

### BACKGROUND OF THE INVENTION

### Field of the Invention

The present invention relates to a communication apparatus configured to wirelessly communicate with an imaging apparatus.

### Description of the Related Art

In recent years, some automatic image capturing cameras have been known to capture images regularly and continuously without image capturing instructions from users. For example, Japanese Patent Application Laid-Open No. 2020-92354 discusses an apparatus including a pan-tilt mechanism that automatically searches for a subject and automatically captures an image of the subject. Since such an apparatus as discussed in Japanese Patent Application Laid-Open No. 2020-92354 automatically captures an image based on determination performed by the camera, it is difficult for the user to observe from outside the apparatus in real time that image capturing has been performed. Thus, for example, when a wireless connection is established, the user may be notified of what image capturing has been performed.

However, if a notification is not appropriately performed in accordance with a communication path through which the notification is transmitted, it may take too much time until when the notification is displayed and displaying the notification can be no longer necessary.

US patent application publication no. US2019/394638 describes a communication apparatus which includes a first communication unit wirelessly communicating with an external apparatus via a first communication method, a second communication unit generating a network and wirelessly communicating with the external apparatus via a second communication method via the network. The communication apparatus also includes a control unit controlling wireless communication with the external apparatus via the second communication unit in a selected procedure from among a plurality of procedures including at least a first procedure and a second procedure. In the first procedure, the control unit generates a network identified by identification information including a character string, and in the second procedure, generates identification information of the network without using the character string, shares the generated identification information with the external apparatus via the first communication unit, and generates a network identified by the shared identification information, to wirelessly communicate with the external apparatus.

US patent application no. US2016/366290A1 discloses a system with an image shooting apparatus (camera) and an information acquiring apparatus (mobile terminal) that communicate wirelessly, typically using a low-speed control link and a high-speed data link. When the camera captures an image, it sends the image (or image ID) and an instruction to the mobile terminal. The mobile terminal then acquires supplementary information (e.g. via sensors, location, etc.) in response to that instruction and associates it with the corresponding image, either on the terminal or by sending the information back to the camera.

### SUMMARY OF THE INVENTION

According to a first aspect of the present invention, there is provided a communication apparatus as specified in claims 1 to 4. According to a second aspect of the present invention, there is provided a control method as specified in claims 5 to 10.

Further features of the present invention will become apparent from the following description of embodiments with reference to the attached drawings.

### BRIEF DESCRIPTION OF THE DRAWINGS

Fig. 1 is a schematic view diagram illustrating an imaging apparatus and a communication apparatus according to a first embodiment of the present invention.
Fig. 2 is a diagram illustrating a configuration of the imaging apparatus according to the first embodiment of the present invention.
Fig. 3 is a diagram illustrating a configuration of the communication apparatus according to the first embodiment of the present invention.
Fig. 4 is a flowchart illustrating processing during transmission of a notification by the imaging apparatus according to the first embodiment of the present invention.
Fig. 5A is a flowchart illustrating a processing procedure of receiving notification by the communication apparatus according to the first embodiment of the present invention. Fig. 5B is a flowchart illustrating a processing procedure of switching a communication path from Bluetooth^{®} LE to Wi-Fi by the communication apparatus according to the first embodiment of the present invention.
Fig. 6 is a diagram describing a notification history according to the first embodiment of the present invention.
Fig. 7 is a diagram illustrating a notification Bluetooth^{®} Low Energy (LE) message according to the first embodiment of the present invention.
Fig. 8 is a diagram illustrating a notification Wi-Fi message according to the first embodiment of the present invention.
Fig. 9 is a diagram illustrating interpretation of notification character string according to the first embodiment of the present invention.
Fig. 10 is a diagram illustrating display of a notification transmitted via a communication using Bluetooth^{®} LE according to the first embodiment of the present invention.
Fig. 11 is a diagram illustrating display of a notification transmitted via Wi-Fi according to the first embodiment of the present invention.
Fig. 12 is a diagram illustrating a notification history screen according to a second embodiment of the present invention.
Fig. 13 is a flowchart illustrating a processing procedure of displaying the notification history screen according to the second embodiment of the present invention.
Fig. 14 is a flowchart illustrating a processing procedure of deleting a notification from a notification history according to a third embodiment of the present invention.

### DESCRIPTION OF THE EMBODIMENTS

Hereinafter, embodiments of the present invention will be described in detail with reference to the accompanying drawings.

A description will be given of communication system according to a first embodiment including a camera as an imaging apparatus 100 for transmitting and displaying an image-attached notification and a smartphone as a communication apparatus 110. Communication procedures before and after switching a communication path between a first communication path and a second communication path will also be described.

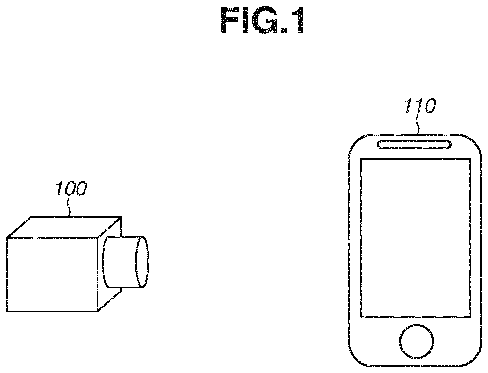

Fig. 1 is a schematic view of the imaging apparatus 100 and the communication apparatus 110. The imaging apparatus 100 and the communication apparatus 110 each include a Bluetooth^{®} communication module and a wireless LAN communication module, and communicate with each other via a connection using a wireless communication system described below. In the following description, a digital camera is taken as an example of the imaging apparatus 100, but the imaging apparatus 100 is not limited to a digital camera. The imaging apparatus 100 may be, for example, a mobile media player or an information processing apparatus, such as a tablet device or a personal computer. In the following description, a smartphone is taken as an example of the communication apparatus 110, but the communication apparatus 110 is not limited to a smartphone. The communication apparatus 110 may be, for example, a mobile media player or an information processing apparatus, such as a tablet device or a personal computer.

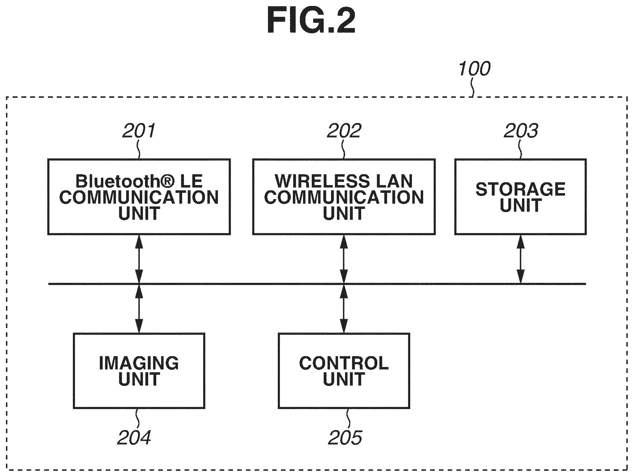

Fig. 2 is a diagram illustrating a configuration of the imaging apparatus 100. The imaging apparatus 100 includes a Bluetooth^{®} Low Energy (LE) communication unit 201 for Bluetooth^{®} LE as the first communication path and a wireless local area network (LAN) communication unit 202 for a wireless LAN (hereinafter called Wi-Fi) in conformity with IEEE802.11 standard series as the second communication path, and communicates with the communication apparatus 110. In the following description, Bluetooth^{®} LE and wireless LAN are given as examples of wireless communication technologies used for the first and second communication paths. However, the invention is not limited to such communication technologies and other wireless communication technologies may be used. For example, other short range or low speed communication technologies such as Zigbee or infrared communication may be used for the first communication path and other wireless communication technologies supporting higher data rates or higher speeds, such as cellular communication technologies, may be used for the second communication path.

A storage unit 203 stores various types of information, such as communication programs to be executed by a control unit 205 and parameters for communication. Digital image data output from an imaging unit 204 is converted by the control unit 205 into a recording format, such as JPEG or MPEG, and is recorded on the storage unit 203.

The imaging unit 204 receives light passed through a lens group and incident on an imaging element, and outputs information on an electric charge according to an amount of the light, as digital image data to the control unit 205. The imaging element is generally a complementary metal oxide semiconductor (CMOS) or a charge coupled device (CCD).

The control unit 205 controls the entire imaging apparatus 100 by executing the control programs stored in the storage unit 203, and is implemented by, for example, a central processing unit (CPU). Various operations by the imaging apparatus 100 described below are achieved by the control unit 205 executing the control programs stored in the storage unit 203. In place of the control unit 205 controlling the entire imaging apparatus 100, a plurality of hardware units may share processing to control the entire imaging apparatus 100.

After determination of a notification to be transmitted, the control unit 205 transmits the notification to the communication apparatus 110 by the Bluetooth^{®} LE communication unit 201 and the wireless LAN communication unit 202 as a notification transmission unit.

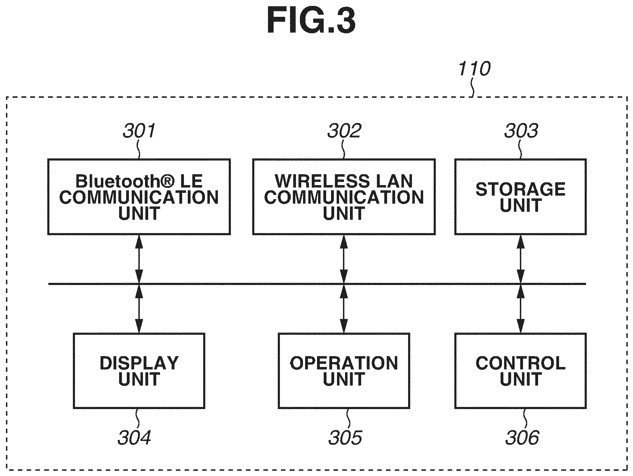

Fig. 3 is a diagram illustrating a configuration of the communication apparatus 110. The communication apparatus 110 includes a Bluetooth^{®} LE communication unit 301 and a wireless LAN communication unit 302 that are equivalent to the Bluetooth^{®} LE communication unit 201 and the LAN communication unit 202 of the imaging apparatus 100, respectively, and the imaging apparatus 100 and the communication apparatus 110 communicate with each other using these communication units.

A storage unit 303 stores various types of information, such as communication programs to be executed by a control unit 306 and parameters for communication.

A display unit 304 has, for example, a function of outputting visually recognizable information using, for example, an LCD or an LED, or a function of outputting sound using, for example, a speaker, and displays various types of information.

An operation unit 305 includes buttons, for example, that accept user operations on the communication apparatus 110. In the present embodiment, the display unit 304 and the operation unit 305 are included in a touch panel and thus are configured as a common member.

The control unit 306 controls the entire communication apparatus 110 by executing the control programs stored in the storage unit 303 and is implemented by a CPU, for example. Various operations by the communication apparatus 110 described below are achieved by the control unit 306 executing the control programs stored in the storage unit 303. In place of the control unit 306 controlling the entire communication apparatus 110, a plurality of hardware units may share processing to control the entire communication apparatus 110.

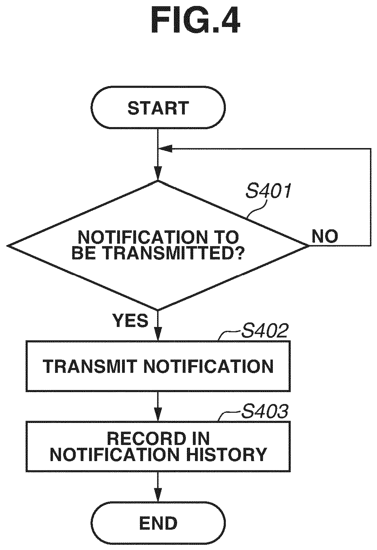

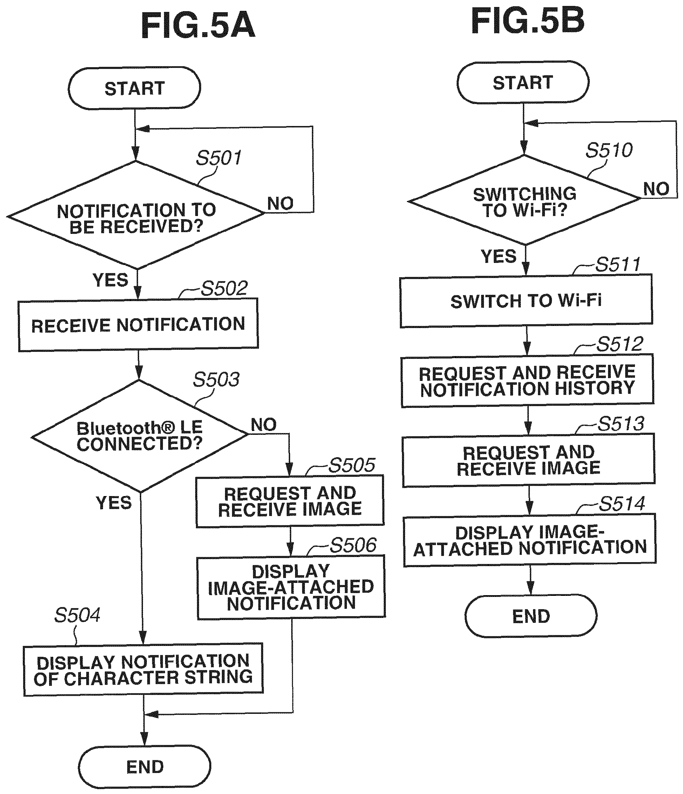

Next, a processing procedure from transmission and reception of an image-attached notification between the imaging apparatus 100 and the communication apparatus 110 to displaying the notification to the user will be described with reference to Fig. 4 and Figs. 5A and 5B. According to the present embodiment, the imaging apparatus 100 and the communication apparatus 110 have been powered on in advance and a communication using Bluetooth^{®} LE has been already established between the imaging apparatus 100 and the communication apparatus 110.

Fig. 4 is a flowchart illustrating a processing procedure of transmitting a notification by the imaging apparatus 100. Fig. 5A is a flowchart illustrating a processing procedure of receiving the notification by the communication apparatus 110, and Fig. 5B is a flowchart illustrating a processing procedure of switching a communication path by the communication apparatus 110 from a communication using Bluetooth^{®} LE to a communication using Wi-Fi.

First, the processing procedure illustrated in the flowchart of Fig. 4 will be described. The steps in the flowchart are executed by the control unit 205 controlling each unit of the imaging apparatus 100. However, the steps will be described below as being executed by the imaging apparatus 100 for ease of understanding. The processing procedure is started in a state where the imaging apparatus 100 and the communication apparatus 110 are connected with each other via a communication using Bluetooth^{®} LE or a wireless LAN.

First, in step S401, the imaging apparatus 100 determines whether an event to be notified to the user has occurred in an image capturing status or a state of a housing of the imaging apparatus 100. Examples of the event includes recommended image selection which is executed on a condition that the number of captured images reaches a predetermined number, low battery of the imaging apparatus 100 at or below a predetermined level, low memory capacity of a recording medium at or below a predetermined level, and the like. Examples of the event also includes detection of an image capturing status in a imaging result where imaging has been performed on a backlighted subject, performed in a dark place, or performed at an excessively low position, and the like.

Whether the number of captured images reaches the predetermined number is determined by counting the number of captured images every time when imaging is performed. In a case where a notification is transmitted in response to the event, the counting is reset, and then the number of captured images is started again. In a case where the number of captured images reaches the predetermined number, processing of selecting a user's recommended image from among the captured images is also executed. In a case where a user's recommended image is selected as a result of the processing, the imaging apparatus 100 determines that an event for the recommended image occurs, in response to completion of the selection. Whether the battery is low is determined by detecting changes in voltage. Whether a memory capacity of the recording medium is low is determined every time when an image is captured and the captured image is stored. Whether imaging has been performed on a backlighted subject, performed in a dark place, or performed at an excessively low position is determined based on an analysis performed by the control unit 205 using a captured image.

In a case where an event to be notified has occurred (YES in step S401), the processing proceeds to step S402. In step S402, the imaging apparatus 100 creates a notification message and transmits a notification to the communication apparatus 110. The notification transmitted by the imaging apparatus 100 is any one of notifications predetermined in different types. The notification types each corresponding to a different event is predetermined in a table (not illustrated). For example, in a case of an occurrence of an event in which a user's recommended image is selected, a notification of a type for image acquisition is transmitted. In a case of an occurrence of an event in which the battery is low or a memory capacity of the recording medium is low, a notification of a type for state notification is transmitted. In a case of an occurrence of an event in which imaging has been performed on a backlighted subject, performed in a dark place, or performed at an excessively low position, a notification of a type for an error is transmitted. Based on the notification type, whether an image is to be attached to or associated with a notification is determined. In a case where a notification to be transmitted is an image-attached notification, a notification message of the notification includes an image ID that is image identification information for uniquely identifying a corresponding image saved in the storage unit 203. In the present exemplary embodiment, a notification of the type for image acquisition is determined as a type for which an image is to be attached to or associated with a notification, and a notification of the type for state notification or the type for an error is determined as not a type for which an image is to be attached to or associated with a notification.

The image ID may be an any numeric value, a directory number and a file number in accordance with a camera file system standard, a universally unique identifier (UUID) assigned to the image, or the like.

In step S403, the imaging apparatus 100 records information on the transmitted notification on the storage unit 203 serving as a notification history recording unit. The information recorded here will be called notification history. The notification history holds a certain number of pieces of information on one or more notifications for events occurred in the past.

The processing procedure in the flowchart of Fig. 5A will be described. The steps in the flowchart are executed by the control unit 306 controlling each unit of the communication apparatus 110. However, the steps will be described below as being executed by the communication apparatus 110 for ease of understanding. The processing procedure is started in a state where the imaging apparatus 100 and the communication apparatus 110 are connected with each other via a communication using Bluetooth^{®} LE or a wireless LAN.

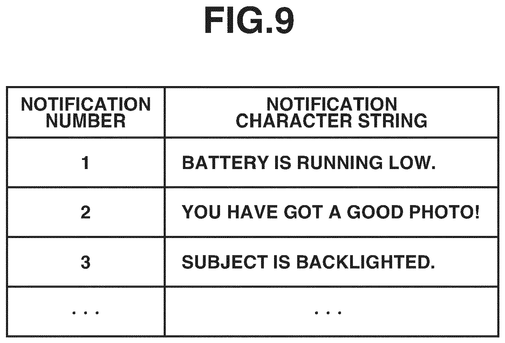

First, in step S501, the communication apparatus 110 is on standby to receive the notification massage transmitted from the imaging apparatus 100. In step S502, the communication apparatus 110 receives the notification massage (for example, at a reception means or unit of the communication apparatus 110 which may be part of the control unit 306 and/or the Bluetooth^{®} LE communication unit 301 or the wireless LAN communication unit 302). After the receipt of the notification massage, in step S503, the communication apparatus 110 checks a communication path status. In a case where Bluetooth^{®} LE is used for the connection (YES in step S503), the processing proceeds to step S504. In step S504, the communication apparatus 110 displays the notification of a character string on the display unit 304. The character string to be displayed as the notification is obtained by retrieving a notification number as a notification content identifier from the notification message, and acquiring the character string(s) with reference to a notification character string table illustrated in Fig. 9. In this process, even in a case where the received notification massage is an image-attached notification, an image is not displayed but the notification character string corresponding to the notification number included in the notification message is displayed.

On the other hand, in a case where Wi-Fi is used for the connection (NO in step S503), the processing proceeds to step S505. In step S505, the communication apparatus 110 receives an image by an image acquisition unit using the image ID included in the received notification message, and in step S506, the communication apparatus 110 displays the image-attached notification. The image acquisition unit is provided by the control unit 306 and inquires of the imaging apparatus 100 about the image using the image ID received from the imaging apparatus 100, and acquires the image via the wireless LAN communication unit 302.

The processing procedure of the flowchart of Fig. 5B will be described. The steps in the flowchart are executed by the control unit 306 controlling each unit of the communication apparatus 110. However, the steps will be described below as being executed by the communication apparatus 110 for the ease of understanding. The processing procedure is started in a state where the imaging apparatus 100 and the communication apparatus 110 are connected with each other via a communication using Bluetooth^{®} LE or a wireless LAN.

In a case where Bluetooth^{®} LE is used for the connection, in step S510, the communication apparatus 110 is on standby for a timing for switching the communication path to Wi-Fi. In a case where a condition for switching the communication path to Wi-Fi is satisfied (YES in step S510), the processing proceeds to step S511. In step S511, the communication apparatus 110 switches the communication path from Bluetooth^{®} LE to Wi-Fi by a communication path switching unit (or switching means). The timing for switching the communication path to Wi-Fi (the condition for switching the communication path to Wi-Fi) is when a dedicated application for operating the imaging apparatus 100 is activated by a user operation and the application starts operating in the foreground of the communication apparatus 110.

The switching of the communication path is performed by so-called handover. Specifically, when the dedicated application for operating the imaging apparatus 100 starts operating in the foreground of the communication apparatus 110, the communication apparatus 110 uses Bluetooth^{®} LE to send a request for switching the communication path to Wi-Fi to the imaging apparatus 100. Upon receipt of the request, the imaging apparatus 100 uses Bluetooth^{®} LE to transmit a network parameter for Wi-Fi to the communication apparatus 110. The network parameters here include an SSID and a password. Further, the imaging apparatus 100 generates a Wi-Fi network. Specifically, the imaging apparatus 100 starts broadcasting a beacon including the SSID having been transmitted to the communication apparatus 110 using Bluetooth^{®} LE, and waits for a request for participation in the Wi-Fi network from the communication apparatus 110. Meanwhile, upon receipt of the network parameter including the SSID and the password, the communication apparatus 110 requests participation in the Wi-Fi network generated by the imaging apparatus 100. When the imaging apparatus 100 permits the participation of the communication apparatus 110, the connection using Wi-Fi between the imaging apparatus 100 and the communication apparatus 110 is established. Accordingly, the switching of the communication path from Bluetooth^{®} LE to Wi-Fi is completed.

After the switching of the communication path to Wi-Fi, in step S512, the communication apparatus 110 receives a notification history from the imaging apparatus 100 by a notification history acquisition unit. The notification history acquisition unit is provided by the control unit 306, and sends a notification history request to the imaging apparatus 100 to receive the notification history recorded on the storage unit 203 of the imaging apparatus 100.

All notifications recorded in the notification history may be transmitted by the imaging apparatus 100. However, information to be used in the first embodiment is information on the latest notification as described below, and thus it is preferable to transmit the latest notification in the notification history.

After receipt of the notification history, in a case where the notification message includes an image ID, in step S513, the communication apparatus 110 acquires a corresponding image from the imaging apparatus 100 by the image acquisition unit. Finally, in step S514, the communication apparatus 110 displays the image-attached notification using at least a portion of the received image.

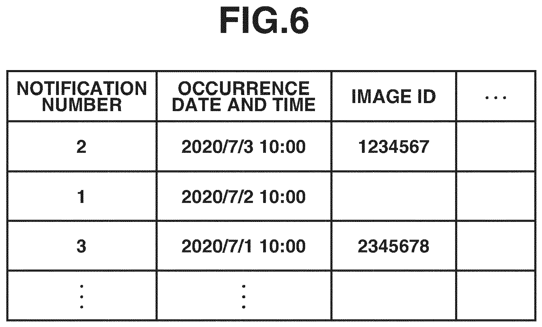

Fig. 6 is a diagram illustrating the notification history stored by the imaging apparatus 100 (step S403) when a notification is transmitted. One notification is represented in one line, and each time a new notification is transmitted, one new line is added to the top of the history to record information. Notification number is a number for uniquely identifying a type of the corresponding notification. Occurrence date and time is a date and time when the notification has occurred. Information on occurrence date and time is recorded using a character string or a numeric value indicating the date and time. Image ID is image identification information indicating an image attached to or associated with the notification in the present embodiment. The image ID is an identifier for uniquely identifying an image recorded in the imaging apparatus 100. Image ID is recorded with a numeric value for uniquely specifying an image or a file path or address indicating a location of the image.

Image IDs are not necessarily recorded for all notifications. Non-image-attached notifications have no corresponding images, and thus image IDs are not recorded for non-image-attached notifications. A line having a notification number 1 in Fig. 6 represents such a case. On the other hand, the notifications having notification numbers 2 and 3 are image-attached notifications.

Information in a notification may include any information, other than the above described information, to be stored as notification information. Examples of information include identifiers for identifying a specific person, a specific time period, error information, and the like. These pieces of information may not be included in all notifications but may be included as a combination of pieces of information to be used.

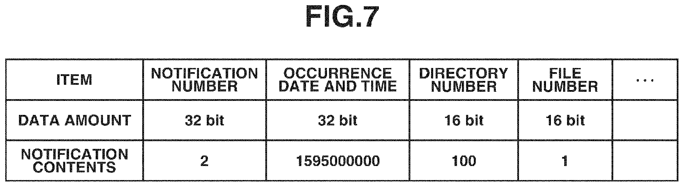

Fig. 7 is a diagram illustrating a notification message transmitted using Bluetooth^{®} LE. The message includes a notification number, an occurrence date and time, a directory number and a file number as an image ID. The notification number and the occurrence date and time are as described above with reference to Fig. 6. The directory number and the file number are provided in accordance with the camera file system standard, and these numbers are used to identify a unique image file by combining the numbers. For example, the image file with the directory number of "100" and the file number of "1" described in Fig. 7 is identified as "DCIM/100xxxxx/yyyy0001.zzz" where xxxxx and yyyy are arbitrary character strings determined by a design of the imaging apparatus 100, and zzz is a file extension.

The message described in Fig. 7 is a mere example and the notification is not limited to this form. For example, the message may not include the occurrence date and time. The image ID may be represented by some numeric value or character string. However, since the data amount of message transmittable using Bluetooth^{®} LE is limited, it is desirable to reduce the data amount as much as possible. Consequently, the image ID is more desirably represented by a numeric value, rather than by a character string.

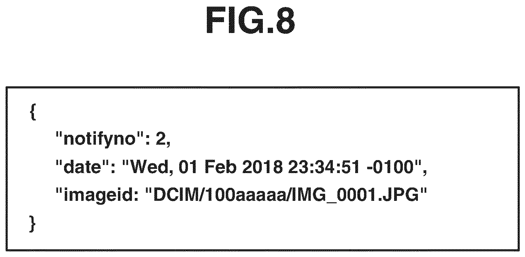

Fig. 8 is a diagram illustrating a notification message transmitted using Wi-Fi. The message is represented in a JavaScript Object Notation (JSON) format and includes a notifyno variable as a notification number, a date variable as an occurrence date and time, and an imageid variable as an image ID. The notifyno variable indicates the notification number by a numeric value. The date variable indicates information on the date and time by a character string. The imageid variable indicates a file path representing an image file location by a character string.

The message described in Fig. 8 is a mere example, and is not limited to this form but may be represented in a format other than a JSON format or by a number sequence. The message may not include the occurrence date and time. The imageid variable may be represented in a manner similar to that of the message for Bluetooth^{®} LE.

In the present embodiment, information on the same content is transmitted even in different formats in accordance with the case using Bluetooth^{®} LE and Wi-Fi. However, information transmitted using Bluetooth^{®} LE and information transmitted using Wi-Fi can be different contents from each other. For example, among pieces of notification information transmitted using Bluetooth^{®} LE, a directory number and a file number as an image ID are not used for notification display, and thus these pieces of information can be omitted.

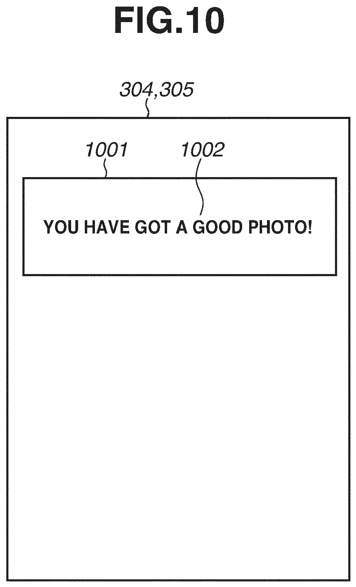

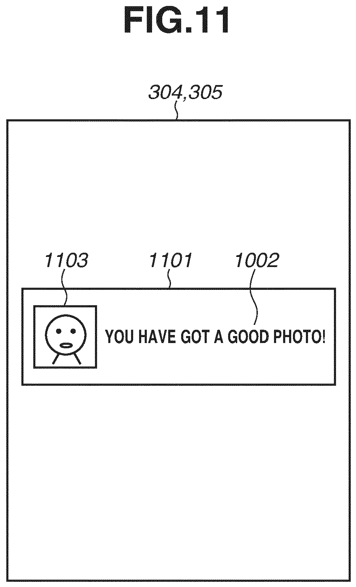

Next, a notification displayed on the communication apparatus 110 will be described with reference to Figs. 10 and 11. Fig. 10 illustrates a notification displayed in step S504 in Fig. 5A, and Fig. 11 illustrates a notification displayed in steps S506 and S514 in Figs 5A and 5B.

In the present embodiment, when a notification is displayed in step S504, the dedicated application has not been started and the notification is displayed using a notification function provided by an operating system in the communication apparatus 110, such as a smartphone. Fig. 10 illustrates a notification area 1001 where the notification is displayed and a notification character string 1002.

Next, when the user presses the notification area 1001 or an icon of the dedicated application to start the dedicated application, the notification is displayed in the dedicated application as illustrated in Fig. 11. A notification display area 1101 is an area in the dedicated application as illustrated in Fig. 11. A notification character string 1102 is the character string (text) described above with reference to Fig. 10. An attached image 1103 acquired by using the image ID included in the notification message (steps S505 and S513) is also displayed.

The notification display area 1101 or the attached image 1103 can be pressed as a button by the user, and a function to be activated by pressing the button may be displaying the attached image 1103 in an enlarged size or moving the attached image 1103 to a screen for displaying a list of other high-quality photographs.

The description has been given of the method for recording a notification in the notification history using a timing of after transmission of the notification from the imaging apparatus 100 to the communication apparatus 110 as a timing for recording the notification in the notification history. However, the timing for recording is not limited to this. For example, an event to be notified may occur in a state where neither Bluetooth^{®} LE nor Wi-Fi is used for a connection. In such a case, a notification may be recorded in the notification history upon an occurrence of an event to be notified.

In the method described above, all notifications transmitted are recorded in the notification history. However, notifications to be recorded in the notification history may be selected in accordance with the types of notifications or under other conditions.

The description has been given of the method in which, when an image is associated with a notification history and a notification is acquired by a communication path using Wi-Fi, the notification history is acquired first, and then image identification information included in the notification history is used to acquire the image. Alternatively, the notification history to which the image information is directly attached may be transmitted and received. In this case, the image information may be recorded directly in the notification history recorded on the storage unit 203, or the image identification information may be recorded in the notification history recorded on the storage unit 203, and then the corresponding image may be read from the storage unit 203 and attached to the notification history at the time of transmission of the notification history.

In the present embodiment, in a communication using low-speed Bluetooth^{®} LE, the user operates an application other than the dedicated application on the communication apparatus 110, such as a smartphone. In many cases, a smartphone provides a service via some communication with a communication target different from the imaging apparatus 100. Consequently, forcibly changing the communication path by the application running in the background may interfere with the user operation. Thus, in the present embodiment, while the notification system is operating in the background, a minimal communication is performed to avoid interference with the user operation. Further, as described above, when the notification system shifts to the foreground according to a user operation, the notification system switches to the higher-speed communication path to receive and provide sufficient information to be presented to the user based on the history information.

According to the present embodiment, it is possible to provide a communication system that is capable of appropriately presenting an image-attached notification to the user by the function of displaying the image-attached notification, without interfering with the user operation due to switching of a communication path.

In the first embodiment, when the dedicated application for the communication apparatus 110 is started and the communication apparatus 110 is connected to a Wi-Fi network, the latest notification is displayed again. However, the user may wish to check more notifications far back into the recorded notification history.

In a second embodiment, a description will be given of a method in which, when the dedicated application for the communication apparatus 110 is started and the communication apparatus 110 is connected to a Wi-Fi network, all notifications recorded in the notification history in the imaging apparatus 100 is displayed again. A description will be also given of a method of data transmission and reception involved in displaying of the notification history.

A system configuration in the second embodiment is the same as that in the first embodiment, and thus redundant description thereof will be omitted. Differences from the first embodiment will be described below.

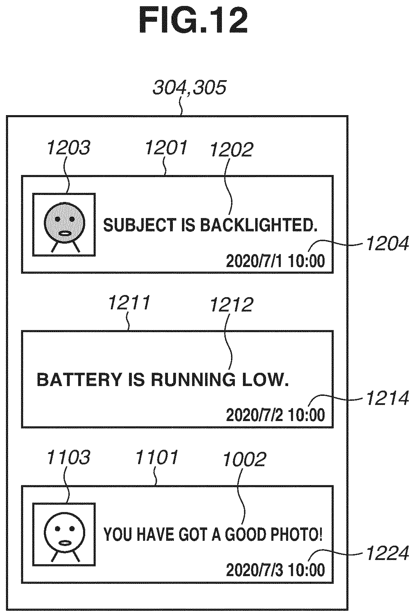

Fig. 12 is a diagram describing a history screen as a history display unit. The history screen is displayed on the display unit 304 of the communication apparatus 110, where notifications having occurred in the past are displayed in list form. Fig. 12 represents a screen display of the notification history illustrated in Fig. 6 in chronological order from the top of the list. Notification occurrence dates and times (1204, 1214, and 1224) are displayed in notification display areas 1201, 1211, and 1101, respectively.

The notification display area 1201 is an area for the oldest notification, and includes a text 1202 and an image 1203. The text 1202 indicates that an imaged subject is backlighted at a timing of the notification, and the image 1203 is an image in an angle of view of the imaging unit 204 at the timing of the notification.

The notification display area 1211 is an area for the second oldest notification and includes a text 1212 indicating that a battery of the imaging apparatus 100 is running low. In a case of a non-image-attached notification like the case seen in the notification display area 1211, a character string is displayed without an image.

The number of notifications displayed on the history screen is not limited to three but all notifications recorded on the imaging apparatus 100 may be displayed. The history screen may have a function of scrolling through the history by a user operation.

In the example described above, notification occurrence dates and times are displayed in a year-month-date-time format. However, the display format of notification occurrence dates and times is not limited to this. For example, a time elapsed from a notification occurrence may be displayed, and in that case, the time displayed may be rounded such as "one minute before" or "two days before".

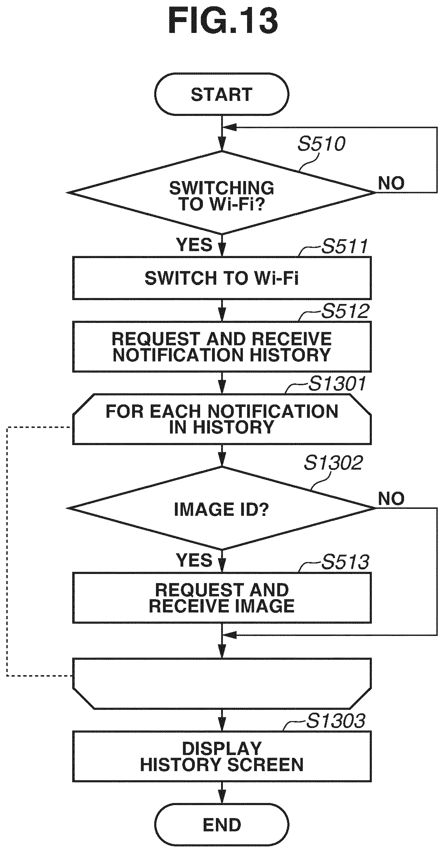

Fig. 13 is a flowchart illustrating a behavior of the communication apparatus 110 in a case where the history screen with a plurality of notifications in the notification history is displayed. Since Fig. 13 has many similarities to Fig. 5B, differences will be described.

In step S512, the communication apparatus 110 receives the notification history, and then in step S1302, the communication apparatus 110 determines whether image IDs are attached to all notifications included in the notification history. In a case where the image IDs are attached to all notifications (YES in step S1302), the processing proceeds to step S513. In step S513, the communication apparatus 110 requests an image, and a loop of step S1301 iterates for all the notifications.

After acquisition of images attached to all notifications, in step S1303, the communication apparatus 110 displays the history screen.

In the case of displaying the notification history screen as illustrated in Fig. 12, in general, the communication apparatus 110 records the received notifications and uses the recorded information at the time of screen display. However, in the case of transmitting and receiving a notification including heavy data in a low-speed communication path, the aforementioned display method is impractical because it will take much time to acquire the data or the user has to allow a data gap. In the present embodiment, the description has been given of the method in which the imaging apparatus 100 stores the notification occurrence history, and once the high-speed communication path becomes available, transmitting and receiving a large amount of data is performed.

In the present embodiment, as described above, after the dedicated application in the communication apparatus 110 is started and connected to a Wi-Fi network, all notifications in the notification history recorded on the imaging apparatus 100 are displayed again. However, the timing for displaying the notification history screen is not limited to this. For example, after the start of the dedicated application, the notification history screen may be called by a user operation.

According to the present embodiment, it is possible to provide a communication system that can appropriately present image-attached notifications occurred in the past to the user by the function of displaying the history of image-attached notifications.

An imaging apparatus 100 in a third embodiment will be described. A description will be given of a case where an image indicated by image identification information included in the notification history has been already deleted at the time of transmission of the notification history, the imaging apparatus 100 changes a notification history.

The imaging apparatus 100 has an image deletion unit that deletes an image from the storage unit 203. The image deletion unit has functions of, for example, deleting an image selected by the user, deleting all recorded information from the storage unit 203, automatically deleting a poor-quality photo image for continuing automatic image capturing, and the like. For example, the user can display a list of images saved in the imaging apparatus 100 by a function of a dedicated application installed in the communication apparatus 110 and input an instruction for deleting an image selected by the user from the list. In this case, upon receipt of the instruction for deleting an image, the dedicated application (for example, the dedicated application may include a deletion means or function) instructs the imaging apparatus 100 to delete the image. The image deletion unit may also delete an image to be attached to a notification described above in relation to the first and second embodiments.

In the above described case, there may be no image to be used in displaying a notification. Thus, the notification may be displayed in an incomplete state without no image to be displayed together with the notification. The present embodiment is a solution to such an issue.

A system configuration in the third embodiment is the same as those in the first and second embodiments, and thus redundant description thereof will be omitted. Differences from the first and second embodiments will be described below.

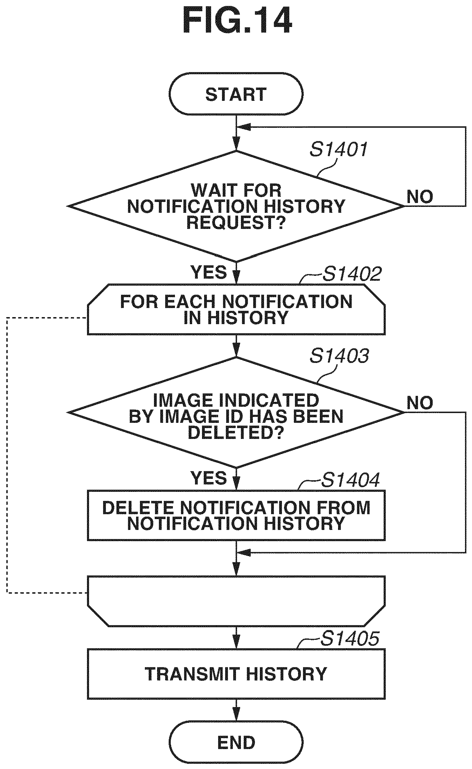

Fig. 14 is a flowchart illustrating a processing procedure from receipt of a request for a notification history to transmission of the notification history by the imaging apparatus 100. In step S1401, the imaging apparatus 100 is on standby to receive a notification history request from the communication apparatus 110. After the receipt of the notification history request, in step S1402, the imaging apparatus 100 reads the notification history from the storage unit 203, and in step S1403, the imaging apparatus 100 uses image IDs included in information of notifications in the history to determine whether the corresponding images are in the storage unit 203. In this processing, while all the notifications included in the notification history are checked simply for presence of corresponding images, according to the present invention, it is more desirable to refer to notification numbers of the notifications and perform the checking of presence of corresponding images for image-attached notifications.

In a case where there is no image indicated by an image ID, that is, in a case where the image has been deleted by some unit (YES in step S1403), the processing proceeds step S1404. In step S1404, the imaging apparatus 100 deletes an item of the corresponding notification from the notification history. The imaging apparatus 100 checks presence of an image each for all the notifications with image IDs recorded in the notification history, and then in step S1405, the imaging apparatus 100 transmits the remaining information in the notification history to the communication apparatus 110.

In the present embodiment, the description has been given of the method of displaying the history screen where there is no image corresponding to an image-attached notification. However, a similar method can be used for a notification display screen as described above in relation to the first embodiment. In this case, in a case where the latest notification is deleted, the previous notification may be displayed as the latest notification or a message indicating that there is no notification to be displayed may be presented.

According to the present embodiment, it is possible to provide the function of preventing display inconsistency in displaying an image-attached notification in a case where no image corresponding to the image-attached notification is present.

While the description has been given of the case where data attached to a notification is an image in the first to third embodiments, sound, movies, or other data can be attached to a notification.

Preferred embodiments of the present invention have been described so far. However, the present invention is not limited to these embodiments and is defined by the accompanying claims.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments and is defined by the accompanying claims.

## Claims

1. A communication apparatus (110) comprising:
first communication means for wirelessly communicating with an imaging apparatus (100) using a first wireless communication technology;
second communication means for wirelessly communicating with the imaging apparatus (100) using a second wireless communication technology, wherein the second wireless communication technology supports higher data rates or higher speeds than the first wireless communication technology;
reception means for receiving a notification from the imaging apparatus (100); and
control means (306);
wherein the control means is configured to perform control corresponding to outputting a first notification including at least a portion of an image received from the imaging apparatus or outputting a second notification not including the image received from the imaging apparatus based on whether the notification is received via the first communication means or the second communication means, and
wherein the first notification and the second notification include a character string corresponding to a common message,
the communication apparatus (110) further comprising switching means for switching between a state of being connected to the imaging apparatus (100) by the first communication means (301) and a state of being connected to the imaging apparatus (100) by the second communication means (302),
wherein, in a case where the switching means performs switching from the state of being connected to the imaging apparatus (100) by the first communication means (301) to the state of being connected to the imaging apparatus (100) by the second communication means (302), the control means (306) requests information about a notification history from the imaging apparatus,
wherein the notification history includes a notification number associated with a notification and, in a case of an image-attached notification, an image ID as image identification information indicating an image attached to or associated with the notification, and
wherein, after receipt of the notification history, in a case where a notification in the notification history includes an image ID, the communication apparatus acquires an image corresponding to the image ID from the imaging apparatus (100) and displays, based on the acquired image, a notification or a history screen using at least a portion of the acquired image.

2. The communication apparatus according to claim 1, wherein, in a case where a notification including information for specifying the image is received via the second communication means (302), the control means (306) requests the image from the imaging apparatus (100) via the second communication means, and upon receipt of the requested image, performs control for outputting the first notification.

3. The communication apparatus according to claim 1 or 2, wherein, in a case where a notification including information for specifying the image is received via the first communication means (301), the control means performs control for outputting the second notification.

4. The communication apparatus according to claim 1, further comprising:
deletion means for deleting an image stored in the imaging apparatus (100),
wherein a notification corresponding to the image deleted by the deletion means is not included in the information about the notification history.

5. A control method of a communication apparatus (110) including first communication means (301) for wirelessly communicating with an imaging apparatus (100) and second communication means (302) for wirelessly communicating with the imaging apparatus, the control method comprising:
receiving (S502) a notification from the imaging apparatus (100); and
controlling whether to perform outputting a first notification including at least a portion of an image received from the imaging apparatus or outputting a second notification not including the image received from the imaging apparatus based on whether the notification is received via the first communication means (301) or the second communication means (302),
wherein the first notification and the second notification include a character string corresponding to a common message,
the control method further comprising switching between a state of being connected to the imaging apparatus (100) by the first communication means (301) and a state of being connected to the imaging apparatus by the second communication means (302),
wherein, in a case where the switching (S511) is performed from the state of being connected to the imaging apparatus (100) by the first communication means (301) to the state of being connected to the imaging apparatus (100) by the second communication means (302), the controlling includes requesting (S512) information about a notification history from the imaging apparatus,
wherein the notification history includes a notification number associated with a notification and, in a case of an image-attached notification, an image ID as image identification information indicating an image attached to or associated with the notification, and
wherein, after receipt of the notification history, in a case where a notification in the notification history includes an image ID, the control method further includes acquiring an image corresponding to the image ID from the imaging apparatus (100) and displaying, based on the acquired image, a notification or a history screen using at least a portion of the acquired image.

6. The control method of the communication apparatus according to claim 5, wherein, in a case where a notification including information for specifying the image is received via the second communication means (302), the controlling includes requesting (S505) the image from the imaging apparatus via the second communication means, and upon receipt of the requested image, performing control for outputting the first notification.

7. The control method of the communication apparatus according to claim 5 or 6, wherein, in a case where a notification including information for specifying the image is received via the first communication means (301), the controlling includes performing control for outputting the second notification.

8. The control method of a communication apparatus according to claim 5, further comprising:
deleting an image stored in the imaging apparatus (100),
wherein a notification corresponding to the deleted image is not included in the information about the notification history.

9. A computer program comprising instructions to cause the communication apparatus according to any one of claims 1 to 4 to execute the steps of the control method according to any one of claims 5 to 8.

10. A computer-readable medium carrying a computer program according to claim 9.

## Patentansprüche

1. Kommunikationsvorrichtung (110), umfassend:
eine erste Kommunikationseinrichtung zum drahtlosen Kommunizieren mit einer Bildgebungsvorrichtung (100) unter Verwendung einer ersten Drahtloskommunikationstechnologie;
eine zweite Kommunikationseinrichtung zum drahtlosen Kommunizieren mit der Bildgebungsvorrichtung (100) unter Verwendung einer zweiten Drahtloskommunikationstechnologie, wobei die zweite Drahtloskommunikationstechnologie höhere Datenraten oder höhere Geschwindigkeiten als die erste Drahtloskommunikationstechnologie unterstützt;
eine Empfangseinrichtung zum Empfangen einer Benachrichtigung von der Bildgebungsvorrichtung (100); und
eine Steuereinrichtung (306);
wobei die Steuereinrichtung konfiguriert ist, eine Steuerung entsprechend einer Ausgabe einer ersten Benachrichtigung, die mindestens einen Teil eines von der Bildgebungsvorrichtung empfangenen Bildes enthält, oder einer Ausgabe einer zweiten Benachrichtigung, die das von der Bildgebungsvorrichtung empfangene Bild nicht enthält, basierend darauf durchzuführen, ob die Benachrichtigung über die erste Kommunikationseinrichtung oder die zweite Kommunikationseinrichtung empfangen wird, und
wobei die erste Benachrichtigung und die zweite Benachrichtigung eine Zeichenfolge enthalten, die einer gemeinsamen Nachricht entspricht,
wobei die Kommunikationsvorrichtung (110) ferner eine Umschalteinrichtung zum Umschalten zwischen einem Zustand, in dem sie durch die erste Kommunikationseinrichtung (301) mit der Bildgebungsvorrichtung (100) verbunden ist, und einem Zustand, in dem sie durch die zweite Kommunikationseinrichtung (302) mit der Bildgebungsvorrichtung (100) verbunden ist, umfasst,
wobei in einem Fall, in dem die Umschalteinrichtung ein Umschalten von dem Zustand, in dem sie durch die erste Kommunikationseinrichtung (301) mit der Bildgebungsvorrichtung (100) verbunden ist, zu dem Zustand, in dem sie durch die zweite Kommunikationseinrichtung (302) mit der Bildgebungsvorrichtung (100) verbunden ist, durchführt, die Steuereinrichtung (306) Informationen über einen Benachrichtigungsverlauf von der Bildgebungsvorrichtung anfordert,
wobei der Benachrichtigungsverlauf eine Benachrichtigungsnummer, die einer Benachrichtigung zugeordnet ist, und in einem Fall einer Benachrichtigung, an der ein Bild angehängt ist, eine Bild-ID als Bildidentifikationsinformationen, die ein Bild angeben, das an die Benachrichtigung angehängt oder ihr zugeordnet ist, enthält,
wobei nach dem Empfang des Benachrichtigungsverlaufs in einem Fall, in dem eine Benachrichtigung in dem Benachrichtigungsverlauf eine Bild-ID enthält, die Kommunikationsvorrichtung ein Bild, das der Bild-ID entspricht, von der Bildgebungsvorrichtung (100) erfasst und basierend auf dem erfassten Bild eine Benachrichtigung oder einen Verlaufsbildschirm unter Verwendung mindestens eines Teils des erfassten Bildes anzeigt.

2. Kommunikationsvorrichtung nach Anspruch 1, wobei in einem Fall, in dem eine Benachrichtigung, die Informationen zum Spezifizieren des Bildes enthält, über die zweite Kommunikationseinrichtung (302) empfangen wird, die Steuereinrichtung (306) das Bild von der Bildgebungsvorrichtung (100) über die zweite Kommunikationseinrichtung anfordert und bei Empfang des angeforderten Bildes eine Steuerung zum Ausgeben der ersten Benachrichtigung durchführt.

3. Kommunikationsvorrichtung nach Anspruch 1 oder 2, wobei in einem Fall, in dem eine Benachrichtigung, die Informationen zum Spezifizieren des Bildes enthält, über die erste Kommunikationseinrichtung (301) empfangen wird, die Steuereinrichtung eine Steuerung zum Ausgeben der zweiten Benachrichtigung durchführt.

4. Kommunikationsvorrichtung nach Anspruch 1, ferner umfassend:
eine Löscheinrichtung zum Löschen eines in der Bildgebungsvorrichtung (100) gespeicherten Bildes,
wobei eine Benachrichtigung, die dem durch die Löscheinrichtung gelöschten Bild entspricht, nicht in den Informationen über den Benachrichtigungsverlauf enthalten ist.

5. Steuerverfahren einer Kommunikationsvorrichtung (110), die eine erste Kommunikationseinrichtung (301) zum drahtlosen Kommunizieren mit einer Bildgebungsvorrichtung (100) und eine zweite Kommunikationseinrichtung (302) zum drahtlosen Kommunizieren mit der Bildgebungsvorrichtung enthält, wobei das Steuerverfahren umfasst:
Empfangen (S502) einer Benachrichtigung von der Bildgebungsvorrichtung (100); und
Steuern, ob eine Ausgabe einer ersten Benachrichtigung, die mindestens einen Teil eines von der Bildgebungsvorrichtung empfangenen Bildes enthält, oder eine Ausgabe einer zweiten Benachrichtigung, die das von der Bildgebungsvorrichtung empfangene Bild nicht enthält, basierend darauf durchzuführen ist, ob die Benachrichtigung über die erste Kommunikationseinrichtung (301) oder die zweite Kommunikationseinrichtung (302) empfangen wird,
wobei die erste Benachrichtigung und die zweite Benachrichtigung eine Zeichenfolge enthalten, die einer gemeinsamen Nachricht entspricht,
wobei das Steuerverfahren ferner ein Umschalten zwischen einem Zustand, in dem sie durch die erste Kommunikationseinrichtung (301) mit der Bildgebungsvorrichtung (100) verbunden ist, und einem Zustand, in dem sie durch die zweite Kommunikationseinrichtung (302) mit der Bildgebungsvorrichtung verbunden ist, umfasst,
wobei in einem Fall, in dem das Umschalten (S511) von dem Zustand, in dem sie durch die erste Kommunikationseinrichtung (301) mit der Bildgebungsvorrichtung (100) verbunden ist, zu dem Zustand, in dem sie durch die zweite Kommunikationseinrichtung (302) mit der Bildgebungsvorrichtung (100) verbunden ist, durchgeführt wird, das Steuern ein Anfordern (S512) von Informationen über einen Benachrichtigungsverlauf von der Bildgebungsvorrichtung enthält,
wobei der Benachrichtigungsverlauf eine Benachrichtigungsnummer, die einer Benachrichtigung zugeordnet ist, und in einem Fall einer Benachrichtigung, an der ein Bild angehängt ist, eine Bild-ID als Bildidentifikationsinformationen, die ein Bild angeben, das an die Benachrichtigung angehängt oder ihr zugeordnet ist, enthält, und
wobei nach dem Empfang des Benachrichtigungsverlaufs in einem Fall, in dem eine Benachrichtigung in dem Benachrichtigungsverlauf eine Bild-ID enthält, das Steuerverfahren ferner ein Erfassen eines Bildes, das der Bild-ID entspricht, von der Bildgebungsvorrichtung (100) und ein Anzeigen, basierend auf dem erfassten Bild, einer Benachrichtigung oder eines Verlaufsbildschirms unter Verwendung mindestens eines Teils des erfassten Bildes enthält.

6. Steuerverfahren der Kommunikationsvorrichtung nach Anspruch 5, wobei in einem Fall, in dem eine Benachrichtigung, die Informationen zum Spezifizieren des Bildes enthält, über die zweite Kommunikationseinrichtung (302) empfangen wird, das Steuern ein Anfordern (S505) des Bildes von der Bildgebungsvorrichtung über die zweite Kommunikationseinrichtung und bei Empfang des angeforderten Bildes ein Durchführen einer Steuerung zum Ausgeben der ersten Benachrichtigung enthält.

7. Steuerverfahren der Kommunikationsvorrichtung nach Anspruch 5 oder 6,
wobei in einem Fall, in dem eine Benachrichtigung, die Informationen zum Spezifizieren des Bildes enthält, über die erste Kommunikationseinrichtung (301) empfangen wird, das Steuern ein Durchführen einer Steuerung zum Ausgeben der zweiten Benachrichtigung enthält.

8. Steuerverfahren einer Kommunikationsvorrichtung nach Anspruch 5, ferner umfassend:
Löschen eines in der Bildgebungsvorrichtung (100) gespeicherten Bildes,
wobei eine Benachrichtigung, die dem gelöschten Bild entspricht, nicht in den Informationen über den Benachrichtigungsverlauf enthalten ist.

9. Computerprogramm, das Anweisungen umfasst, um die Kommunikationsvorrichtung nach einem der Ansprüche 1 bis 4 zu veranlassen, die Schritte des Steuerverfahrens nach einem der Ansprüche 5 bis 8 auszuführen.

10. Computerlesbares Medium, auf dem ein Computerprogramm nach Anspruch 9 vorhanden ist.

## Revendications

1. Appareil de communication (110) comprenant :
un premier moyen de communication servant à communiquer sans fil avec un appareil d'imagerie (100) en utilisant une première technologie de communication sans fil ;
un deuxième moyen de communication servant à communiquer sans fil avec l'appareil d'imagerie (100) en utilisant une deuxième technologie de communication sans fil, dans lequel la deuxième technologie de communication sans fil prend en charge de plus hauts débits de données ou de plus grandes vitesses que la première technologie de communication sans fil ;
un moyen de réception servant à recevoir une notification en provenance de l'appareil d'imagerie (100) ; et
un moyen de commande (306) ;
dans lequel le moyen de commande est configuré pour effectuer une commande correspondant à la délivrance d'une première notification incluant au moins une partie d'une image reçue en provenance de l'appareil d'imagerie ou à la délivrance d'une deuxième notification n'incluant pas l'image reçue en provenance de l'appareil d'imagerie sur la base du fait que la notification est reçue par l'intermédiaire du premier moyen de communication ou du deuxième moyen de communication, et
dans lequel la première notification et la deuxième notification incluent une chaîne de caractères correspondant à un message commun,
l'appareil de communication (110) comprenant en outre un moyen de basculement servant à basculer entre un état de connexion à l'appareil d'imagerie (100) par le premier moyen de communication (301) et un état de connexion à l'appareil d'imagerie (100) par le deuxième moyen de communication (302),
dans lequel, dans le cas où le moyen de basculement effectue un basculement de l'état de connexion à l'appareil d'imagerie (100) par le premier moyen de communication (301) à l'état de connexion à l'appareil d'imagerie (100) par le deuxième moyen de communication (302), le moyen de commande (306) demande des informations concernant un historique de notifications à l'appareil d'imagerie,
dans lequel l'historique de notifications inclut un numéro de notification associé à une notification et, dans le cas d'une notification à image jointe, un ID d'image à titre d'informations d'identification d'image indiquant une image jointe ou associée à la notification, et
dans lequel, après réception de l'historique de notifications, dans le cas où une notification figurant dans l'historique de notifications inclut un ID d'image, l'appareil de communication acquiert une image correspondant à l'ID d'image auprès de l'appareil d'imagerie (100) et affiche, sur la base de l'image acquise, une notification ou un écran d'historique en utilisant au moins une partie de l'image acquise.

2. Appareil de communication selon la revendication 1, dans lequel, dans le cas où une notification incluant des informations servant à spécifier l'image est reçue par l'intermédiaire du deuxième moyen de communication (302), le moyen de commande (306) demande l'image à l'appareil d'imagerie (100) par l'intermédiaire du deuxième moyen de communication, et à la suite de la réception de l'image demandée, effectue une commande servant à délivrer la première notification.

3. Appareil de communication selon la revendication 1 ou 2, dans lequel, dans le cas où une notification incluant des informations servant à spécifier l'image est reçue par l'intermédiaire du premier moyen de communication (301), le moyen de commande effectue une commande servant à délivrer la deuxième notification.

4. Appareil de communication selon la revendication 1, comprenant en outre :
un moyen de suppression servant à supprimer une image stockée dans l'appareil d'imagerie (100),
dans lequel une notification correspondant à l'image supprimée par le moyen de suppression n'est pas incluse dans les informations concernant l'historique de notifications.

5. Procédé de commande d'un appareil de communication (110) incluant un premier moyen de communication (301) servant à communiquer sans fil avec un appareil d'imagerie (100) et un deuxième moyen de communication (302) servant à communiquer sans fil avec l'appareil d'imagerie, le procédé de commande comprenant :
la réception (S502) d'une notification en provenance de l'appareil d'imagerie (100) ; et
la commande de s'il faut effectuer la délivrance d'une première notification incluant au moins une partie d'une image reçue en provenance de l'appareil d'imagerie ou la délivrance d'une deuxième notification n'incluant pas l'image reçue en provenance de l'appareil d'imagerie sur la base du fait que la notification est reçue par l'intermédiaire du premier moyen de communication (301) ou du deuxième moyen de communication (302),
dans lequel la première notification et la deuxième notification incluent une chaîne de caractères correspondant à un message commun,
le procédé de commande comprenant en outre le basculement entre un état de connexion à l'appareil d'imagerie (100) par le premier moyen de communication (301) et un état de connexion à l'appareil d'imagerie par le deuxième moyen de communication (302),
dans lequel, dans le cas où le basculement (S511) est effectué de l'état de connexion à l'appareil d'imagerie (100) par le premier moyen de communication (301) à l'état de connexion à l'appareil d'imagerie (100) par le deuxième moyen de communication (302), la commande inclut la demande (S512) d'informations concernant un historique de notifications à l'appareil d'imagerie,
dans lequel l'historique de notifications inclut un numéro de notification associé à une notification et, dans le cas d'une notification à image jointe, un ID d'image à titre d'informations d'identification d'image indiquant une image jointe ou associée à la notification, et
dans lequel, après réception de l'historique de notifications, dans le cas où une notification figurant dans l'historique de notifications inclut un ID d'image, le procédé de communication inclut en outre l'acquisition d'une image correspondant à l'ID d'image auprès de l'appareil d'imagerie (100) et l'affichage, sur la base de l'image acquise, d'une notification ou d'un écran d'historique en utilisant au moins une partie de l'image acquise.

6. Procédé de commande de l'appareil de communication selon la revendication 5, dans lequel, dans le cas où une notification incluant des informations servant à spécifier l'image est reçue par l'intermédiaire du deuxième moyen de communication (302), la commande inclut la demande (S505) de l'image à l'appareil d'imagerie par l'intermédiaire du deuxième moyen de communication, et à la suite de la réception de l'image demandée, la réalisation d'une commande servant à délivrer la première notification.

7. Procédé de commande de l'appareil de communication selon la revendication 5 ou 6, dans lequel, dans le cas où une notification incluant des informations servant à spécifier l'image est reçue par l'intermédiaire du premier moyen de communication (301), la commande inclut la réalisation d'une commande servant à délivrer la deuxième notification.

8. Procédé de commande d'un appareil de communication selon la revendication 5, comprenant en outre :
la suppression d'une image stockée dans l'appareil d'imagerie (100),
dans lequel une notification correspondant à l'image supprimée n'est pas incluse dans les informations concernant l'historique de notifications.

9. Programme d'ordinateur comprenant des instructions pour amener l'appareil de communication selon n'importe laquelle des revendications 1 à 4 à exécuter les étapes du procédé de commande selon n'importe laquelle des revendications 5 à 8.

10. Support lisible par ordinateur portant un programme d'ordinateur selon la revendication 9.
